# EUROPÄISCHE PATENTSCHRIFT

(11) **EP 2 382 104 B1**
(45) Veröffentlichungstag und Bekanntmachung des Hinweises auf die Patenterteilung: **11.09.2013**
(21) Anmeldenummer: 09813854.8
(22) Anmeldetag: 15.12.2009
(51) Int. Cl.: B60J 7/14, B60J 7/00

(54) **VERDECK EINES CABRIOLET-FAHRZEUGS MIT WENIGSTENS ZWEI DACHSEGMENTEN UND EINEM INNENHIMMEL**
CABRIO TOP WITH AT LEAST TWO ROOF SEGMENTS AND A HEADLINER
PAVILLON DE CABRIOLET AVEC AU MOINS DEUX SEGMENTS DE TOIT ET UNE GARNITURE

(30) Priorität: 29.12.2008 DE 102008063216
(43) Veröffentlichungstag der Anmeldung: 02.11.2011
(73) Patentinhaber: Wilhelm Karmann GmbH i.l., 49084 Osnabrück (DE)
(72) Erfinder: RICHTER, Markus, 49545 Tecklenburg (DE); RADEMACHER, Udo, 49084 Osnabrück (DE)
(74) Vertreter: Kronthaler, Wolfgang N.K.
(86) Internationale Anmeldenummer: PCT/DE2009/001769
(87) Internationale Veröffentlichungsnummer: WO 2010/075843

(56) Entgegenhaltungen:
- EP-A1- 1 642 756
- DE-A1- 19 921 305
- DE-A1-102007 028 907

## Beschreibung

Die Erfindung betrifft ein Verdeck eines Cabriolet-Fahrzeugs mit wenigstens zwei Dachsegmenten, welche mittels eines Verdeckgestänges zwischen einer einen Fahrzeuginnenraum abdeckenden geschlossenen Position und einer den Fahrzeuginnenraum wenigstens bereichsweise freigebenden offenen Position verfahrbar sind, und mit einem dem Fahrzeuginnenraum zugewandten Innenhimmel nach der im Oberbegriff des Patentanspruches 1 näher definierten Art.

Aus der DE 199 21 305 ist ein Faltverdeck für ein Fahrzeug, insbesondere einen Personenkraftwagen bekannt. Das Faltverdeck setzt sich aus einem.Verdeckgestell und einem außenseitig am Verdeckgestell aufgespannten Verdeckbezug zusammen, wobei das mit aufbauseitig angeordneten Verdecklagern zusammenwirkende Verdeckgestell einen vorderen benachbart dem Windschutzscheibenrahmen verlaufenden großflächigen formsteifen Verdeckabschnitt, einen Hauptspriegel und einen heckseitigen Spannbügel umfasst. Auf der einem Fahrgastraum zugewandten Seite des Verdeckgestells ist dabei ein Innenhimmel vorgesehen, der sich aus einem Mittelteil und zwei an die Längsseiten des Mittelteils angebundenen Seitenteilen zusammensetzt. In einen gemeinsamen Verbindungsbereich von Mittelteil und Seitenteil ist am Innenhimmel auf der dem Fahrgastraum abgekehrten Seite eine längsverlaufende Halteschlaufe angeordnet, durch die ein Haltedraht hindurchführbar ist und welcher den in diesem Bereich lose an dem Verdeckgestell angeordneten Innenhimmel in geschlossener Position des Faltverdecks aufspannt.

Nachteilhafterweise sind die zur Spannung des Innenhimmels in Fahrzeugquerrichtung von dem Halteseil über die Halteschlaufe übertragenen Kräfte bei einer derartigen Ausbildung des Faltverdecks gering, so dass eine gewünschte Spannung des Innenhimmels in Fahrzeugquerrichtung nicht oder nur unter erheblichem Aufwand gewährleistet werden kann.

Weiterhin ist eine Anlage eines derartigen Innenhimmels lediglich an im Wesentlichen gerade Flächen möglich, so dass die Gestaltungsfreiheit des Verdecks nachteilhafterweise eingeschränkt ist.

Der vorliegenden Erfindung liegt die Aufgabe zugrunde, ein Verdeck eines Cabrioletfahrzeugs zur Verfügung zu stellen, bei welchem ein Innenhimmel bei geschlossenem Verdeck auf einfache und kostengünstige Art und Weise auch an komplexen Formgebungen des Verdecks mit einer gewünschten Spannung anordenbar ist.

Diese Aufgabe wird bei einem Verdeck eines Cabriolet-Fahrzeugs der eingangs genannten Art gemäß den Merkmalen des kennzeichnenden Teils des Patentanspruches 1 gelöst. Vorteilhafte Weiterbildungen eines Verdecks eines Cabriolet-Fahrzeugs ergeben sich aus den Unteransprüchen.

Es wird somit ein Verdeck eines Cabriolet-Fahrzeugs mit wenigstens zwei Dachsegmenten, welche mittels eines Verdeckgestänges zwischen einer einen Fahrzeuginnenraum abdeckenden geschlossenen und einer den Fahrzeuginnenraum wenigstens bereichsweise freigebenden offenen Position verfahrbar sind, und mit einem dem Fahrzeuginnenraum zugewandten Innenhimmel vorgeschlagen, welcher wenigstens einen lose gegenüber wenigstens einem Dachsegment geführten Bereich aufweist. Erfindungsgemäß ist dabei vorgesehen, dass wenigstens ein gebogenes, drahtartiges Formgebungselement mit dem Innenhimmel zur Formgebung des Innenhimmels zusammenwirkt.

Ein erfindungsgemäßes Verdeck, welches sowohl als ein Soft-Top-Verdeck als auch als ein Hard-Top-Verdeck ausgebildet sein kann, hat den Vorteil, dass ein Formverlauf des Innenhimmels mittels des wenigstens einen drahtartigen Formgebungselements sehr einfach und flexibel vorgegeben werden kann. Dadurch, dass das drahtartige Formgebungselement in verschiedenartigen Formen ausbildbar ist, ist der Formverlauf des Innenhimmels entsprechend vielfältig ausbildbar und jeweils auf besonders einfache Weise an die von dem jeweiligen Verdeck vorgegebenen Randbedingungen anpassbar.

Mittels des wenigstens einen drahtartigen Formgebungselements ist bei entsprechend steifer Ausbildung des Formgebungselements vorteilhafterweise sowohl eine Führung des Innenhimmels in Verdecklängsrichtung als auch eine Führung des Innenhimmels in Verdeckquerrichtung erzielbar.

Das drahtartige Formgebungselement ermöglicht weiterhin auf vorteilhaft einfache Weise eine definierte Ablage des Innenhimmels in offener Position des Verdecks.

Bei einer vorteilhaften Ausbildung eines erfindungsgemäßen Verdecks kann der lose Bereich des Innenhimmels in der geschlossenen Verdeckposition die Form des wenigstens einen Dachsegments oder die Form eines das wenigstens eine Dachsegment verkleidenden Verkleidungselements nachbildend an dem Dachsegment bzw. dem Verkleidungselement gehalten sein. Da das drahtartige Formgebungselement sehr flexibel gestaltbar ist, kann eine definierte Anlage an dem wenigstens einen Dachsegment bzw. dem Verkleidungselement auch bei komplexen Formen des Dachsegments bzw. des Verkleidungselements auf besonders einfache Weise sichergestellt werden.

Wenn der lose Bereich des Innenhimmels wenigstens bereichsweise heckwärts eines vorderen Dachsegments angeordnet ist und das drahtartige Formgebungselement dort ein lose mit einem hinteren Dachsegment bzw. dem Verkleidungselement verbundenes freies Ende bildet, ist eine sichere Anlage des Innenhimmels an den Dachsegmenten bzw. dem Verkleidungselement bei diversen Verdeckbewegungen möglich, so z. B. auch bei Verdeckmechanismen, bei denen das hintere Dachsegment bei einer Verdecköffnung zunächst in Fahrzeughochrichtung bewegt wird und somit keine feste Anbindung des Innenhimmels an das hintere Dachsegment möglich ist. Durch das drahtartige Formgebungselement kann der Innenhimmel auch ohne eine Verbindung mit dem hinteren Dachsegment in geschlossener Verdeckposition auf einfache Weise in Anlage mit dem hinteren Dachsegment bzw. einem das hintere Dachsegment verkleidenden Verkleidungselement gehalten werden.

Ein erfindungsgemäßes Verdeck kann auch mehr als zwei in Fahrzeuglängsrichtung in geschlossener Verdeckposition hintereinander angeordnete Dachsegmente umfassen. Die hier verwendeten Begriffe "vorderes Dachsegment" und "hinteres Dachsegment" beziehen sich dabei auf zwei jeweils in geschlossener Verdeckposition insbesondere direkt aneinander angrenzende Dachsegmente.

Ein erfindungsgemäße Ausgestaltung eines Verdecks ist entsprechend vielseitig auch bei komplexen Verdeckmechanismen einsetzbar, wobei die Realisierung einer auch optisch ansprechenden Anordnung des Innenhimmels in geschlossener Verdeckposition bei komplexen Verdeckmechanismen erst durch die Erfindung ermöglicht wird. Weiterhin können durch die lose Anbindung des Innenhimmels an beispielsweise ein hinteres Dachsegment bei einer Verdecköffnungs- bzw. - schließbewegung große auf den Innenhimmel wirkende Kräfte vorteilhafterweise vermieden werden.

Bei einer weiteren vorteilhaften Ausführungsform des Verdecks nach der Erfindung weist das hintere Dachsegment eine Heckscheibe auf und ist bei geschlossenem Verdeck im Bereich einer C-Säule einer Fahrzeugkarosserie angeordnet. Damit wird auf einfache Art und Weise erreicht, dass der Innenhimmel bei geschlossenem Verdeck möglichst nahe an das zweite bzw. hintere Dachsegment angelegt wird und beispielsweise bei viersitzigen Cabrioletfahrzeugen im hinteren Sitzbereich eine möglichst große Kopffreiheit für Personen auf den hinteren Fahrgastsitzen zur Verfügung steht.

Eine besonders stabile Anlage des Innenhimmels an wenigstens einem Dachsegment bzw. einem Verkleidungselement wird bei einer vorteilhaften Ausbildung der Erfindung dadurch erreicht, dass ein dem freien Ende abgewandtes Ende des drahtartigen Formgebungselement an einem formstabilen Bauteil angeordnet ist, welches insbesondere Bestandteil des vorderen Dachsegments sein kann. Hierdurch kann eine günstige Abstützwirkung des Innenhimmel an dem vorderen Dachsegment gewährleistet und eine sichere Anlage des Innenhimmels an dem hinteren Dachsegment bzw. dem Verkleidungselement des hinteren Dachsegment insbesondere in geschlossener Verdeckposition sichergestellt werden.

Das dem freien Ende abgewandte Ende des drahtartigen Formgebungselements kann an dem formstabilen Bauteil mit allen bekannten Befestigungsarten festlegbar sein, wobei es insbesondere vorteilhaft ist, wenn das dem freien Ende abgewandte Ende des drahtartigen Formgebungselement über eine Clipsverbindung an dem formstabilen Bauteil festlegbar ist, so dass der Innenhimmel auf einfache und schnelle Weise an dem vorderen Dachsegment anordenbar ist.

Bei einer einfachen Ausbildung der Erfindung kann es vorgesehen sein, dass das drahtartige Formgebungselement in einem schlaufenartigen Randbereich bzw. Saum des Innenhimmels angeordnet ist und somit insbesondere in Verdeckquerrichtung definiert mit dem Innenhimmel verbunden ist bzw. zusammenwirkt.

Weitere Vorteile und vorteilhafte Ausführungen eines Verdecks eines Cabriolet-Fahrzeugs nach der Erfindung ergeben sich aus der Zeichnung und der Beschreibung.

Nachfolgend ist ein vorteilhaftes Ausführungsbeispiel eines Verdecks eines Cabriolet-Fahrzeugs anhand der Zeichnung prinzipmäßig beschrieben.

Es zeigt:
- Fig. 1: eine vereinfachte perspektivische Draufsicht auf ein Verdeck in Alleinstellung, wobei das vorliegend mit drei Dachsegmenten ausgebildete Verdeck in einer geschlossenen Position dargestellt ist;
- Fig. 2: eine vereinfache Teilansicht des Verdecks der Fig. 1 von einem Fahrzeuginnenraum aus, wobei ein das Verdeck auskleidender Innenhimmel ersichtlich ist;
- Fig. 3: eine der Fig. 2 entsprechende Ansicht des Verdecks, wobei das Verdeck in einer teilgeöffneten Position dargestellt ist;
- Fig. 4: eine vereinfachte dreidimensionale Ansicht eines Ausschnitts des Verdecks der Figuren 1 bis 3, wobei ein in einem Randbereich des Innenhimmels angeordnetes und an einem formstabilen Bauteil eines mittleren Dachsegments des Verdecks angeordnetes, drahtartiges Formgebungselement ersichtlich ist; und
- Fig. 5: eine dreidimensionale Ansicht des formstabilen Bauteils des mittleren Dachsegments und des drahtar-tigen Formgebungselements in Alleinstellung.

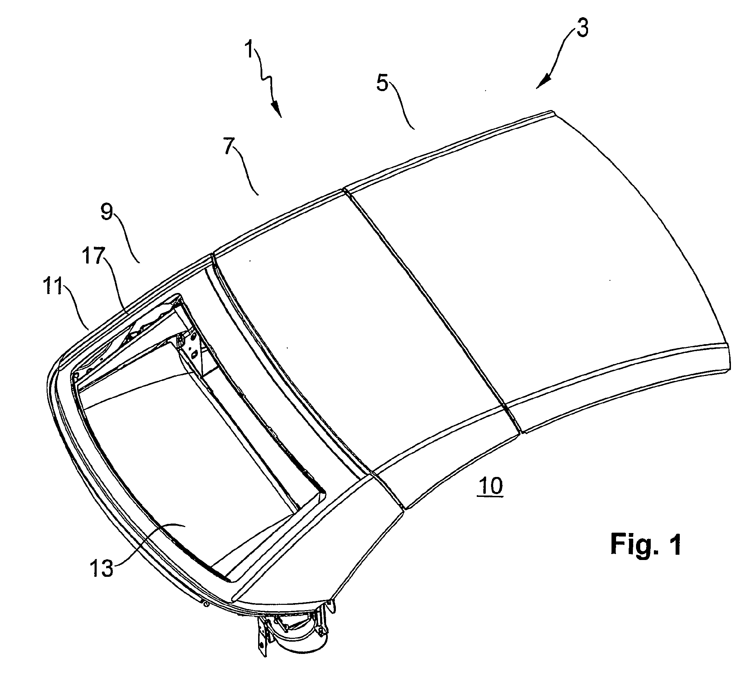

Bezug nehmend auf Fig. 1 ist ein Verdeck 3 eines Cabriolet-Fahrzeugs 1 ersichtlich, welches formstabil als ein so genanntes "Retractable Hard Top" (RHT) ausgebildet ist. Das Verdeck 3 umfasst drei starre Dachsegmente 5, 7 und 9, welche über ein Verdeckgestänge 11 zwischen dem in Fig. 1 dargestellten, einen Fahrzeuginnenraum 10 abdeckenden Zustand und einem nicht näher dargestellten, in einem heckseitigen Stauraum abgelegten Zustand überführbar sind.

Das erste vordere Dachsegment 5 ist in geschlossener Verdeckposition an einem Windschutzscheibenrahmen des Cabriolet-Fahrzeugs 1 festlegbar. In geschlossener Verdeckposition schließt heckwärts an das vordere Dachsegment 5 das zweite mittlere Dachsegment 7 an, an welches wiederum verdeckheckseitig das dritte, hintere eine Heckscheibe 13 aufweisende Dachsegment 9 anschließt.

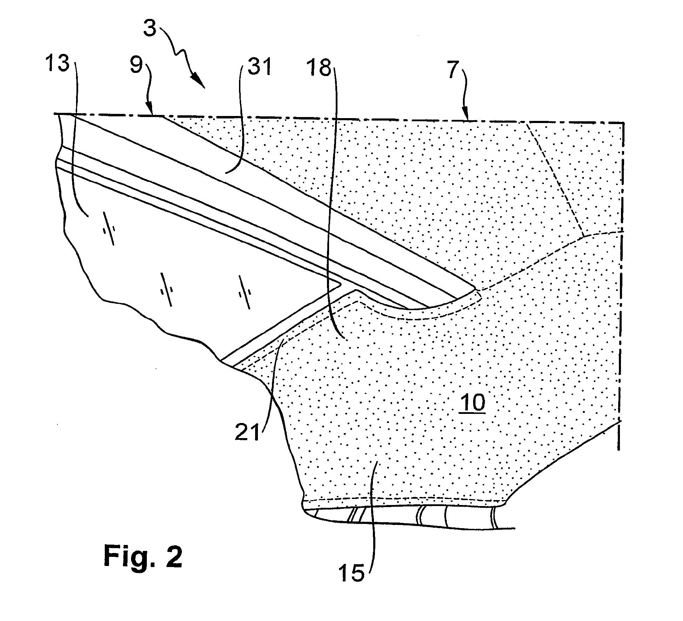

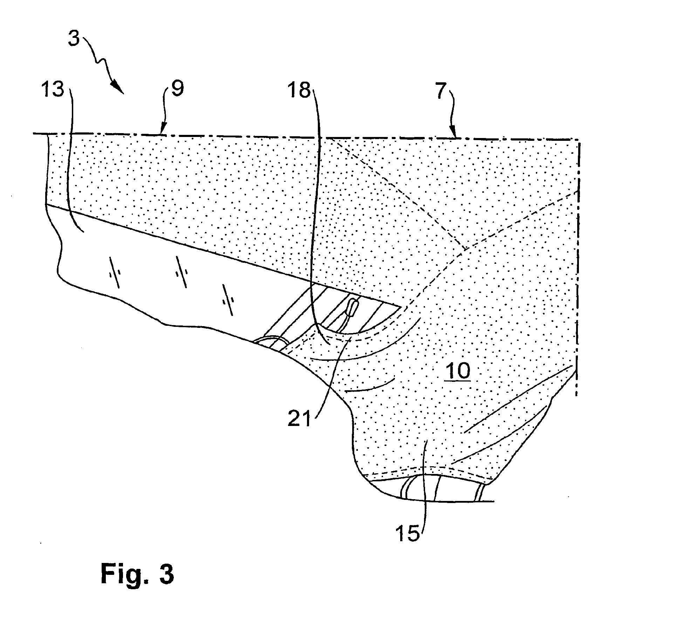

In den Figuren 2 und 3 ist jeweils ein Blick von dem Fahrzeuginnenraum 10 auf einen heckwärtigen Bereich des Verdecks 3 gezeigt, wobei das Verdeck 3 in der Fig. 2 in einer geschlossenen Position und in der Fig. 3 in einer teilgeöffneten Position, bei der das hintere Dachsegment 9 in Verdeckhochrichtung gegenüber dem mittleren Dachsegment 7 angehoben ist, dargestellt ist. Bei einer weiteren Verdecköffnung wird das mittlere Dachsegment 7 unter das hintere Dachsegment 9 geschoben und gemeinsam mit diesem abgelegt.

Zur optisch ansprechenden Gestaltung des Fahrzeuginnenraums 10 sind die Dachsegmente 5, 7 und 9 und das Verdeckgestänge 11 gegenüber dem Fahrzeuginnenraum 10 mit einem Innenhimmel 15 verkleidet, wobei der Innenhimmel 15 auch in seinen Randbereichen eng an Verkleidungselementen 17 der Dachsegmente 7, 9 anliegt.

Bei einer Überführung des Verdecks 3 von seiner geschlossenen Position in seine offene Position wird das hintere Dachsegment 9 zunächst in Fahrzeughochrichtung bewegt. Um das Auftreten von großen Spannungen bzw. die Beschädigung des Innenhimmels 15 bei einer Verdecköffnungsbewegung zu vermeiden, kann der Innenhimmel 15 im Bereich des hinteren Dachsegments 9 deshalb nicht an das hintere Dachsegment 9 angebunden werden.

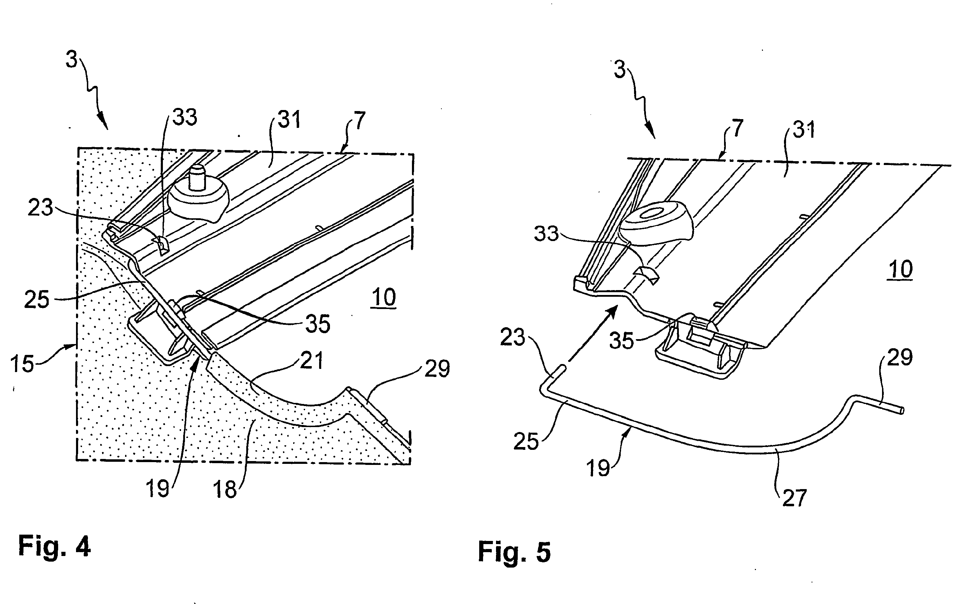

Um dennoch ein enges Anliegen des Innenhimmels 15 in diesem losen Bereich 18 des Innenhimmels 15 an dem hinteren Dachsegment 9 in geschlossener Verdeckposition sicherzustellen, weist der Innenhimmel 15 ein in den Figuren 4 und 5 näher ersichtliches drahtartiges und stabil ausgebildetes Formgebungselement 19 auf, welches in einem als Saum ausgebildeten Randbereich 21 des Innenhimmels 15 angeordnet ist und den Innenhimmel 15 mit seinem losen Bereich 18 auch ohne eine Anbindung an das hintere Dachsegment 9 in einer definierten Position hält, wie es auch Fig. 3 zu entnehmen ist.

Das in den Figuren 4 und 5 ersichtliche drahtartige Formgebungselement 19 ist einer linken Verdeckseite zugeordnet. Auf einer rechten Verdeckseite ist ein analog ausgebildetes drahtartiges Formgebungselement vorgesehen, wobei das Formgebungselement 19 im Folgenden stellvertretend hierfür beschrieben wird.

Das drahtartige Formgebungselement 19 ist in seinem verdeck-frontseitigen vorderen Endbereich mit einem ersten Abschnitt 23 ausgebildet, welches in Verdeckquerrichtung zu einer Verdeckmitte hin verläuft. Heckwärts schließt sich an diesen ersten Abschnitt 23 ein im Wesentlichen rechtwinklig hierzu gebogener zweiter Abschnitt 25 an, welcher zunächst gerade in Verdecklängsrichtung verläuft und etwa bei hälftiger Längserstreckung des Formgebungselements 19 in einem dritten Abschnitt 27 annähernd in Form eines Viertelkreises in Richtung einer Verdeckmitte gebogen ist. Ein gerades freies Ende 29 des drahtartigen Formgebungselements 19 verläuft heckwärts an den kreisförmigen dritten Abschnitt 27 anschließend wieder annähernd rechtwinklig gebogen in Verdecklängsrichtung.

Der Verlauf des drahtartigen Formgebungselements 19 ist vorliegend derart gewählt, dass er auf die anliegenden Verkleidungselemente 17 abgestimmt ist und der Innenhimmel 15 in geschlossener Verdeckposition eng an den Verkleidungselementen 17 anliegt.

Ein drahtartiges Formgebungselement kann in einer alternativen Ausbildung der Erfindung beliebig anders gestaltet und an diverse Formen von Dachsegmenten bzw. Verkleidungselementen angepasst sein. Das drahtartige Formgebungselement kann weiterhin an beliebigen Stellen des Innenhimmels angeordnet sein, wobei auch mehrere drahtartige Formgebungselemente vorgesehen sein können.

Im Bereich des ersten Abschnitts 23 und des zweiten Abschnitts 25 ist das drahtartige Formgebungselement 19 an einem formstabilen Bauteil 31 des mittleren Dachsegments 7 angeordnet, wobei das drahtartige Formgebungselement 19 hierzu mit seinem ersten Abschnitt 23 in einer Ausnehmung 33 des formstabilen Bauteils 31 eingesteckt und im Bereich seines zweiten Abschnitts 25 mittels einer Clipsverbindung 35 an dem formstabilen Bauteil 31 festgelegt ist.

Zum Zusammenwirken mit dem Innenhimmel 15 ist das drahtartige Formgebungselement 19 zumindest in dem dritten Abschnitt 27 und mit dem freien Ende 29 in dem schlaufenartig ausgebildeten Randbereich 21 des Innenhimmels angeordnet, so dass von dem drahtartigen Formgebungselement 19 Kräfte auf den Innenhimmel 15 insbesondere in dem losen Bereich 18 zur Spannung des Innenhimmels 15 in Verdecklängsrichtung und in Verdeckquerrichtung übertragen werden können.

Der seitliche Randbereich 21 des Innenhimmels 15 ist hierbei als wulstförmiger Saum ausgebildet, wobei der wulstförmige Saum in geschlossener Verdeckposition an dem jeweiligen Dachsegment 7, 9 oder Verkleidungselement 17 anliegt.

Grundsätzlich ermöglicht das drahtartige Formgebungselement 19, welches vorliegend aus Metall gebildet ist, jedoch prinzipiell auch aus einem Kunststoffmaterial gebildet sein kann, bei geschlossenem Fahrzeugdach eine verbesserte Halterung des Innenhimmels 15, der aufgrund der bei einer Faltung der einzelnen Dachsegmente 5, 7, 9 zueinander während einer Verdeckbewegung entstehenden Abstände zwischen den Dachsegmenten 5, 7, 9 nicht fest an den Dachsegmenten angebunden werden kann. Das an sich kostengünstige drahtartige Formgebungselement 19 ist auf einfache Weise mit dem Innenhimmel wirkverbunden, spannt den Innenhimmel bei geschlossenem Verdeck in gewünschtem Umfang, zieht ihn an das hintere Dachsegment 9 und legt ihn dort fest.

## Patentansprüche

1. Verdeck eines Cabriolet-Fahrzeugs (1) mit wenigstens zwei Dachsegmenten (5, 7, 9), welche mittels eines Verdeckgestänges (11) zwischen einer einen Fahrzeuginnenraum (10) abdeckenden geschlossenen und einer den Fahrzeuginnenraum (10) wenigstens bereichsweise freigebenden offenen Position verfahrbar sind, und einem dem Fahrzeuginnenraum (10) zugewandten Innenhimmel (15), welcher wenigstens einen lose gegenüber wenigstens einem Dachsegment (5, 7, 9) geführten Bereich (18) aufweist,
**dadurch gekennzeichnet,**
**dass** wenigstens ein gebogenes, drahtartiges Formgebungselement (19) mit dem Innenhimmel (15) zur Formgebung des Innenhimmels (15) zusammenwirkt.

2. Verdeck nach Anspruch 1,
**dadurch gekennzeichnet,**
**dass** der lose Bereich (18) des Innenhimmels (15) in der geschlossenen Verdeckposition die Form des wenigstens einen Dachsegments (5, 7, 9) oder die Form wenigstens eines das wenigstens eine Dachsegment (5, 7, 9) verkleidenden Verkleidungselements (17) nachbildend an dem Dachsegment (5, 7, 9) bzw. dem Verkleidungselement (17) gehalten ist.

3. Verdeck nach einem der Ansprüche 1 oder 2,
**dadurch gekennzeichnet,**
**dass** der lose Bereich (18) des Innenhimmels (15) wenigstens bereichsweise heckwärts eines vorderen Dachsegments (7) angeordnet ist und das drahtartige Formgebungselement (19) dort ein lose mit einem hinteren Dachsegment (9) bzw. dem Verkleidungselement (17) verbundenes freies Ende (29) bildet.

4. Verdeck nach Anspruch 3,
**dadurch gekennzeichnet,**
**dass** das hintere Dachsegment (9) eine Heckscheibe (13) aufweist und bei geschlossenem Verdeck (3) im Bereich einer C-Säule einer Fahrzeugkarosserie angeordnet ist.

5. Verdeck nach einem der Ansprüche 3 oder 4,
**dadurch gekennzeichnet,**
**dass** ein dem freien Ende (29) abgewandtes Ende (23, 25) des drahtartigen Formgebungselements (19) an einem formstabilen Bauteil (31) angeordnet ist.

6. Verdeck nach Anspruch 5,
**dadurch gekennzeichnet,**
**dass** das formstabile Bauteil (31) Bestandteil des vorderen Dachsegments (7) ist.

7. Verdeck nach einem der Ansprüche 5 oder 6,
**dadurch gekennzeichnet,**
**dass** das dem freien Ende (29) abgewandte Ende (23, 25) des drahtartigen Formgebungselements (19) an dem formstabilen Bauteil (31) festlegbar ist.

8. Verdeck nach einem der Ansprüche 5 bis 7,
**dadurch gekennzeichnet,**
**dass** das dem freien Ende (29) abgewandte Ende (23, 25) des drahtartigen Formgebungselement (19) über eine Clipsverbindung (35) an dem formstabilen Bauteil (31) festlegbar ist.

9. Verdeck nach einem der Ansprüche 1 bis 8,
**dadurch gekennzeichnet,**
**dass** das drahtartige Formgebungselement (19) in einem schlaufenartigen Randbereich (21) des Innenhimmels (15) angeordnet ist.

## Claims

1. A hood for a convertible vehicle (1), which comprises at least two roof segments (5, 7, 9), displaceable by means of a hood linkage (11) between a closed position covering a passenger compartment (10) and an open position uncovering at least part of the passenger compartment (10), and further comprises an inside roof lining (15) facing the passenger compartment (10), said inside roof lining (15) comprising at least one area (18) which is loosely guided with respect to at least one roof segment (5, 7, 9),
**characterised in that**
at least one bent, wire-like shaping element (19) cooperates with the inside roof lining (15) to shape the inside roof lining (15).

2. The hood according to claim 1, **characterised in that**, in the closed position of the hood, the loose area (18) of the inside roof lining (15) is supported, in a manner imitating the shape of the at least one roof segment (5, 7, 9) or the shape of at least one trim element (17) covering the at least one roof segment (5, 7, 9), on the roof segment (5, 7, 9) or on the trim element (17), respectively.

3. The hood according to any one of claims 1 or 2, **characterised in that** the loose area (18) of the inside roof lining (15) is arranged at least partly rearward of a front roof segment (7) and the wire-like shaping element (19) forms a free end (29) there which is loosely connected with a rear roof segment (9) or the trim element (17), respectively.

4. The hood according to claim 3, **characterised in that** the rear roof segment (9) comprises a rear window (13) and is arranged in the area of a C pillar of a vehicle body when the hood (3) is closed.

5. The hood according to any one of claims 3 or 4, **characterised in that** an end (23, 25) of the wirelike shaping element (19) turned away from the free end (29) is arranged on a dimensionally stable component (31).

6. The hood according to claim 5, **characterised in that** the dimensionally stable component (31) is part of the front roof segment (7).

7. The hood according to any one of claims 5 or 6, **characterised in that** the end (23, 25) of the wire-like shaping element (19) turned away from the free end (29) can be fixed to the dimensionally stable component (31).

8. The hood according to any one of claims 5 to 7, **characterised in that** the end (23, 25) of the wire-like shaping element (19) turned away from the free end (29) can be fixed to the dimensionally stable component (31) by a clip connection (35).

9. The hood according to any one of claims 1 to 8, **characterised in that** the wire-like shaping element (19) is arranged in a loop-like edge region (21) of the inside roof lining (15).

## Revendications

1. Capote pour un véhicule cabriolet (1), ladite capote comprenant au moins deux segments de toit (5, 7, 9), qui sont déplaçables au moyen d'une tringlerie de capote (11) entre une position fermée couvrant un habitacle (10) et une position ouverte exposant ledit habitacle (10) au moins partiellement, ladite capote comprenant en outre un habillage de plafond (15) tourné vers l'habitacle (10), ledit habillage de plafond (15) comprenant au moins une région (18) qui est guidée de façon relâchée par rapport audit au moins un segment de toit (5, 7, 9),
**caractérisée en ce**
**qu'**au moins un élément de mise en forme courbé de type fil (19) coopère avec l'habillage de plafond (15) pour la mise en forme de ce dernier.

2. Capote selon la revendication 1, **caractérisée en ce que**, dans la position fermée de la capote, la région relâchée (18) de l'habillage de plafond (15) est supportée, en imitant la forme dudit au moins un segment de toit (5, 7, 9) ou la forme d'au moins un élément d'habillage (17) habillant ledit au moins un segment de toit (5, 7, 9), respectivement par le segment de toit (5, 7, 9) ou l'élément d'habillage (17).

3. Capote selon l'une quelconque des revendications 1 ou 2, **caractérisée en ce que** la région relâchée (18) de l'habillage de plafond (15) est disposée au moins partiellement à l'arrière d'un segment de toit avant (7), l'élément de mise en forme de type fil (19) y constituant une extrémité libre (29) reliée de façon amovible respectivement à un segment de toit arrière (9) ou à l'élément d'habillage (17).

4. Capote selon la revendication 3, **caractérisée en ce que** le segment de toit arrière (9) comprend une lunette arrière (13) et est disposé près d'un montant C d'une carrosserie lorsque la capote (3) est fermée.

5. Capote selon l'une quelconque des revendications 3 ou 4, **caractérisée en ce qu'**une extrémité (23, 25) de l'élément de mise en forme de type fil (19) détournée de l'extrémité libre (29) est disposée sur un composant de forme stable (31).

6. Capote selon la revendication 5, **caractérisée en ce que** le composant de forme stable (31) fait partie du segment de toit avant (7).

7. Capote selon l'une quelconque des revendications 5 ou 6, **caractérisée en ce que** l'extrémité (23, 25) de l'élément de mise en forme de type fil (19) détournée de l'extrémité libre (29) peut être fixée au composant de forme stable (31).

8. Capote selon l'une quelconque des revendications 5 à 7, **caractérisée en ce que** l'extrémité (23, 25) de l'élément de mise en forme de type fil (19) détournée de l'extrémité libre (29) peut être fixée au composant de forme stable (31) par un élément d'encliquetage (35).

9. Capote selon l'une quelconque des revendications 1 à 8, **caractérisée en ce que** l'élément de mise en forme de type fil (19) est disposé dans une région de type dragonne (21) de l'habillage de plafond (15).
